# EUROPEAN PATENT APPLICATION

(11) **EP 3 675 333 A1**
(43) Date of publication of application: **01.07.2020**
(21) Application number: 17925981.7
(22) Date of filing: 25.09.2017
(51) Int. Cl.: H02K 3/52, H02K 11/30

(54) **SUPERCHARGER**

(71) Applicant: Mitsubishi Heavy Industries Engine & Turbocharger, Ltd., Sagamihara-shi, Kanagawa 252-5293 (JP); Technelec Ltd., Leicestershire LE15 6QW (GB)
(72) Inventor: YAMASHITA, Yukio, Tokyo 108-8215 (JP); AN, Byeongil, Sagamihara-shi Kanagawa 252-5293 (JP); SHIBATA, Naomichi, Sagamihara-shi Kanagawa 252-5293 (JP); POLLOCK, Charles, Oakham Rutland LE15 6QW (GB); POLLOCK, Helen, Oakham Rutland LE15 6QW (GB)
(74) Representative: Mader, Joachim
(86) International application number: PCT/JP2017/034600
(87) International publication number: WO 2019/058565

(57) **Abstract**

A supercharger includes a magnetic flux switching motor and a wheel. The magnetic flux switching motor includes a rotor (26), a stator (24) that is an annular member storing the rotor (26) to make the rotor (26) rotatable therein and includes a plurality of stator projecting portions (60) projecting inward in a radial direction from an internal circumferential portion (56A) toward the rotor (26), a field source (80) that is provided in a field slot (62B) serving as a part of a plurality of slots (62) formed between the stator projecting portions (60) to generate a magnetic field of a constant direction, an armature coil (82) that is provided in an armature slot (62A) serving as another (62) of the slots (62), and a controller that applies a single-phase current to the armature coil (82) and changes a direction of the applied single-phase current to change a direction of a magnetic field generated from the armature coil (82) and rotate the rotor (26). The wheel is attached to the rotor (26) and rotates together with rotation of the rotor (26) to compress the air.

## Description

### Field

The present invention relates to a supercharger.

### Background

Superchargers are devices increasing the pressure of the air to be sucked into internal combustion engines of automobiles or the like. In prior art, superchargers acquire rotational force using discharged air and compress the air by the rotational force. In recent years, electric superchargers acquiring rotational force by driving the motors have been applied. For example, Patent Literature 1 discloses an electric supercharger using a switched reluctance motor as a motor. Switched reluctance motors are driven using a two-phase current or a three-phase current, not a single-phase current, in many cases.

### Citation List

### Patent Literature

Patent Literature 1: Japanese Translation of PCT International Application Publication No. 2016-507208

### Summary

### Technical Problem

However, in the case of driving the motor with a current of a plurality of phases, such as a two-phase and a three-phase current, the number of semiconductor switches for control increases, and the size of the motor may increase. In particular, since superchargers are required to achieve downsizing, it is required to reduce the size of the part connected with the motor and the inverter, in the case of using an electric supercharger.

The present invention is to solve the problem described above, and an object of the present invention is to provide, in an electric supercharger using a motor, a supercharger suppressing increase in size.

### Solution to Problem

To solve the problem described above and achieve the object, a supercharger according to the present invention includes a magnetic flux switching motor; and a wheel. The magnetic flux switching motor includes a rotor; a stator that is an annular member storing the rotor to make the rotor rotatable therein and includes a plurality of stator projecting portions projecting inward in a radial direction from an internal circumferential portion toward the rotor; a field source that is provided in a field slot serving as a part of a plurality of slots formed between the stator projecting portions to generate a magnetic field of a constant direction; an armature coil that is provided in an armature slot serving as another of the slots; and an inverter and controller that applies a single-phase current to the armature coil and changes a direction of the applied single-phase current to change a direction of a magnetic field generated from the armature coil and rotate the rotor. The wheel is attached to the rotor, and rotates together with rotation of the rotor to compress the air.

The supercharger uses a single-phase magnetic flux switching motor, thereby being capable of suppressing increase in number of semiconductor switches, and suppressing increase in number of parts connected to the current supply unit. With this structure, the supercharger enables suppression of increase in size.

In the supercharger, it is preferable that the controller stops the rotor at one of a plurality of stop positions determined in a circumferential direction by applying a stop current flowing in a constant direction to the armature coil, in response to receiving an instruction to stop rotation of the rotor. The supercharger fixes the stop position of the rotor, thereby enabling proper rotation of the rotor while suppressing the size.

In the supercharger, it is preferable that the controller starts the rotor by applying a current of a direction opposite to the stop current to the armature coil, in response to receiving an instruction to start the rotor. The supercharger generates a composite magnetic field of a direction different from the direction at the time when the rotor is guided to the stop position, thereby enabling proper rotation of the rotor while suppressing the size.

In the supercharger, it is preferable that the field source is a permanent magnet. The supercharger uses a permanent magnet as the field source, thereby enabling proper generation of a magnetic field of a constant direction.

In the supercharger, it is preferable that the field source is a field coil to which a current of a constant direction is applied. The supercharger uses a field coil, to which a current of a constant direction is applied, as the field source, thereby enabling proper generation of a magnetic field of a constant direction.

In the supercharger, it is preferable that the armature coil is wound around a plurality of the stator projecting portions in a wave-winding manner. The supercharger has the armature coil of a wave winding form, thereby enabling suppression of increase in size more properly.

### Advantageous Effects of Invention

The present invention enables suppression of increase in size of an electric supercharger using a motor.

### Brief Description of Drawings

FIG. 1 is a schematic cross-sectional view of a supercharger according to a present embodiment.
FIG. 2 is a schematic cross-sectional view of a motor unit according to the present embodiment.
FIG. 3 is a schematic diagram illustrating a structure of an armature coil according to the present embodiment.
FIG. 4 is a diagram illustrating an example of a circuit diagram for explaining a current flowing in the present embodiment.
FIG. 5 is an explanatory drawing describing change of a field magnetic field and an armature magnetic field in the case where the magnetic field of the armature coil is changed.
FIG. 6 is a schematic diagram describing rotation of a rotor.
FIG. 7 is a schematic diagram describing control in stopping in the present embodiment.
FIG. 8 is a flowchart for explaining control of stop and start of the rotor according to the present embodiment.
FIG. 9 is a schematic diagram illustrating another example of a field source.
FIG. 10 is a schematic diagram illustrating another example of stator projecting portions and rotor projecting portions.
FIG. 11 is a schematic diagram illustrating an example of wave winding.

### Description of Embodiments

The following is a detailed explanation of a preferred embodiment of the present invention with reference to attached drawings. The present invention is not limited to the embodiment. When a plurality of embodiments are present, the present invention also includes a structure formed of a combination of the embodiments.

### Whole Configuration of Supercharger

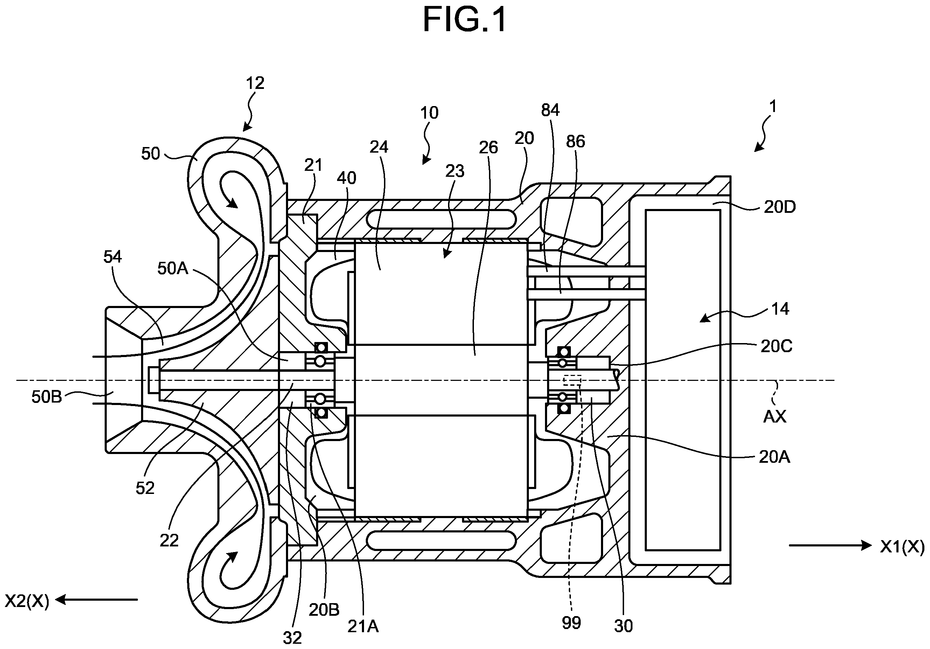

FIG. 1 is a schematic cross-sectional view of a supercharger according to the present embodiment. A supercharger 1 according to the present embodiment is an electric supercharger, and drives a compressor with an electric motor. In this manner, the supercharger 1 sucks the air from the outside, pressurizes the air with an impeller to change the air into compressed air, and supplies the compressed air to the internal combustion engine or the like.

As illustrated in FIG. 1, the supercharger 1 includes a magnetic flux switching motor 10, a compressor 12, and an inverter 14. The inverter 14 acquires a direct current from the battery of the vehicle including the supercharger 1 or the like, and converts the direct current into an alternating current. The magnetic flux switching motor 10 is an electric motor including a motor unit 23. The magnetic flux switching motor 10 is rotated with the alternating current from the inverter 14, and transmits the rotation to the compressor 12. The compressor 12 sucks and pressurizes the gas (air) from the outside by the rotation transmitted from the magnetic flux switching motor 10, and supplies the pressurized compressed gas (compressed air) to the internal combustion engine of the vehicle or the like.

As illustrated in FIG. 1, the magnetic flux switching motor 10 includes housings 20 and 21, a rotation shaft 22, a motor unit 23, and bearings 30 and 32. In the structure, the extending direction of the rotation shaft 22, that is, the axial direction serves as direction X. One direction in the direction X serves as direction X1, and the other direction (the direction opposite to the direction X1) in the direction X serves as direction X2. The direction X1 side is the inverter 14 side, and the direction X2 side is the compressor 12 side.

The housing 20 stores the motor unit 23 and the inverter 14 therein. The housing 20 has a cylindrical hollow shape provided with a closed portion 20A on the direction X1 side and an opening portion 20B on the direction X2 side. The closed portion 20A has a wall-like shape, and includes an opening portion 20C opened in the center. In addition, the housing 20 is provided with a storage portion 20D on the direction X1 side of the closed portion 20A.

The housing 21 has a disc-like shape. The housing 21 is attached to the opening portion 20B of the housing 20, and fixed to the housing 20 with a plurality of bolts. The housing 21 includes an opening 21A opened in the center.

The rotation shaft 22 is an axle-like shaft extending in the X direction, with a central axis AX serving as the central axis. The rotation shaft 22 includes an end portion on the X1 direction side disposed in the opening portion 20C of the housing 20, and is rotatably supported with the bearing 30 in the opening portion 20C. The rotation shaft 22 includes an end portion on the X2 direction side projecting from the opening 21A of the housing 21 toward the direction X2 side. The rotation shaft 22 is rotatably supported with the bearing 32 in the opening 21A.

The motor unit 23 is disposed between the closed portion 20A and the opening portion 20B in the housing 20. The motor unit 23 includes a stator 24 and a rotor 26. The stator 24 is a ring-shaped member, and disposed between the closed portion 20A and the opening portion 20B in the housing 20. The rotor 26 is provided inner than the internal circumference of the stator 24 in the radial direction. The rotor 26 includes an opening in the center through which the rotation shaft 22 is inserted in a fixed state, and is rotatable as one unitary piece with the rotation shaft 22. In the motor unit 23, the rotor 26 is rotated, with the central axis AX serving as the rotation axis, with the current (alternating current) from the inverter 14. The rotation shaft 22 rotates together with the rotor 26, with the central axis AX serving as the rotation axis. The detailed structure of the motor unit 23 will be described later.

The compressor 12 includes a housing 50 and a wheel 52. The housing 50 includes an opening 50A opened on the X1 direction side, and an opening 50B opened on the X2 direction side. The opening 50A and the opening 50B communicate with each other. The housing 50 is attached to the housing 21 at the opening 50A. The wheel 52 is an impeller and stored in the housing 50. The wheel 52 includes an opening in the center through which the rotation shaft 22 is inserted in a fixed state, and is rotatable as one unitary piece with the rotation shaft 22. The wheel 52 forms a channel 54 between the end surface thereof on the X1 side and the internal surface of the housing 50. The wheel 52 rotates, with the central axis AX serving as the rotation axis, together with rotation of the rotation shaft 22. The compressor 12 takes the air (gas) from the outside through the opening 50B into the channel 54 by rotation of the wheel 52. The compressor 12 circulates the air in the channel 54 while compressing the air, and supplies the compressed air to the internal combustion engine or the like.

As described above, the inverter 14 acquires a direct current from the battery or the like in the vehicle that includes the supercharger 1, and converts the direct current into a single-phase alternating current. As the current supply source, the inverter 14 supplies the single-phase alternating current to the motor unit 23 included in the magnetic flux switching motor 10.

### Structure of Motor Unit

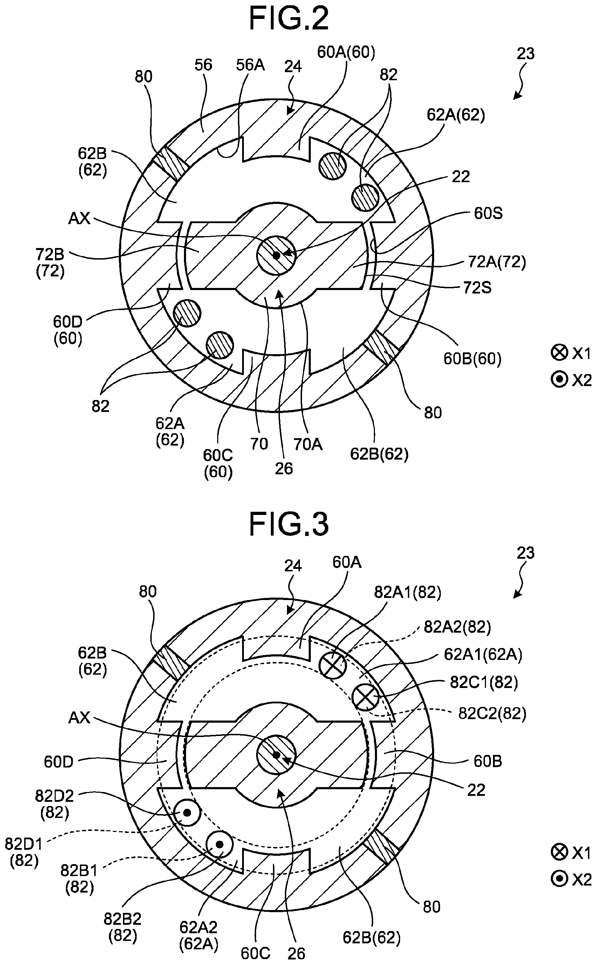

The following is an explanation of the structure of the motor unit 23 included in the magnetic flux switching motor 10. FIG. 2 is a schematic cross-sectional view of the motor unit according to the present embodiment. As illustrated in FIG. 2, the motor unit 23 includes the stator 24, the rotor 26, field sources 80, and an armature coil 82. The motor unit 23 rotates the rotor 26 by generating a magnetic field maintained in a constant direction with the field sources 80 while generating a magnetic field with the armature coil 82 and switching the direction of the magnetic field. Specifically, the motor unit 23 (magnetic flux switching motor 10) is a flux switching motor. The motor unit 23 includes only one series armature coil 82, and causes a single-phase current (single-phase alternating current) to flow through the armature coil 82. Specifically, the motor unit 23 provides only a single-phase current to the armature coil 82, and provides no multiple-phase current, which has different phases. As described above, the motor unit 23 (magnetic flux switching motor 10) is a single-phase flux switching motor.

The stator 24 is a ring-shaped (annular) member, and stores the rotor 26 to make the rotor 26 rotatable therein. The stator 24 is not rotated but constant with respect to the housing 20. The stator 24 is formed of a soft magnetic material, and formed by stacking electromagnetic steel sheets in the present embodiment. As illustrated in FIG. 2, the stator 24 includes a stator base portion 56 and stator projecting portions 60. The stator base portion 56 is a ring-shaped member. The stator projecting portions 60 project inward in the radial direction from an internal circumferential portion 56A of the stator base portion 56. The radial direction is a radial direction with respect to the central axis AX (direction X). A plurality of stator projecting portions 60 are provided on the internal circumferential portion 56A along the circumferential direction. In the example of FIG. 2, four stator projecting portions 60A, 60B, 60C, and 60D are provided as the stator projecting portions 60. The stator projecting portions 60A, 60B, 60C, and 60D are provided in this order along the circumferential direction (clockwise direction in FIG. 2). Four stator projecting portions 60 are provided in the present embodiment, but any number of stator projecting portions 60 may be provided, as long as a plurality of stator projecting portions 60 are provided. The number of stator projecting portions 60 is preferably an even number of 4 or more.

The stator 24 includes slots 62 provided between the stator projecting portions 60. Specifically, each of slots 62 is a groove-like space surrounded by opposed side surfaces of the two stator projecting portions 60 and the internal circumferential portion 56A between the two stator projecting portions 60, and the internal side of the slot 62 in the radial direction is opened. The slots 62 includes armature slots 62A and field slots 62B alternating along the circumferential direction. Specifically, slots 62 provided alternately along the circumferential direction are armature slots 62A, and slots 62 other than the armature slots 62A are field slots 62B. In the example of FIG. 2, an armature slot 62A is provided between the stator projecting portion 60A and the stator projecting portion 60B, a field slot 62B is provided between the stator projecting portion 60B and the stator projecting portion 60C, another armature slot 62A is provided between the stator projecting portion 60C and the stator projecting portion 60D, and another field slot 62B is provided between the stator projecting portion 60D and the stator projecting portion 60A. The numbers of armature slots 62A and field slots 62B depend on the number of stator projecting portions 60.

The rotor 26 is provided inner than the internal circumferential portion 56A of the stator 24 in the radial direction. The rotor 26 is formed of a soft magnetic material, and formed by stacking electromagnetic steel sheets in the present embodiment. The rotor 26 includes a rotor base portion 70 and rotor projecting portions 72. The rotor base portion 70 includes an opening in the center, and the rotation shaft 22 is attached and fixed to the opening. The rotor projecting portions 72 project outward in the radial direction from an external circumferential surface 70A of the rotor base portion 70. When the rotor projecting portion 72 is opposed to the stator projecting portion 60, a front end 72S of the rotor projecting portion 72 is separated from a front end 60S of the stator projecting portion 60 with a minute distance.

In addition, a plurality of rotor projecting portions 72 are provided on the external circumferential surface 70A along the circumferential direction. In the example of FIG. 2, two rotor projecting portions 72A and 72B are provided as the rotor projecting portions 72. In the present embodiment, two rotor projecting portions 72 are provided, but the number of rotor projecting portions 72 may be any number, as long as a plurality of rotor projecting portions 72 are provided. However, the number of rotor projecting portions 72 is preferably half of the number of stator projecting portions 60, and preferably an even number.

The field sources 80 are provided in the field slots 62B. In the present embodiment, since a plurality of (two) field slots 62B are provided, the field sources 80 are provided in the respective field slots 62B. Each of the field sources 80 is a member generating a magnetic field of a constant direction. In the present embodiment, each of the field sources 80 is a permanent magnet, and has one end serving as the N pole along the circumferential direction, and the other end serving as the S pole. The field sources 80 are provided along the circumferential direction such that the same poles are opposed to each other. The field sources 80 generate a magnetic field of a constant direction as described above, and do not change the direction of the magnetic field. Each of the field sources 80 is not limited to a permanent magnet, as long as it is a member generating a magnetic field of a constant direction.

The armature coil 82 is provided in the armature slots 62A. The armature coil 82 is a coil, and wound around the stator projecting portions 60 provided between the two armature slots 62A. In the present embodiment, the armature coil 82 is wound around the stator projecting portion 60B and the stator projecting portion 60C together, and wound around the stator projecting portion 60D and the stator projecting portion 60A together.

In the present embodiment, only one armature coil 82 is provided. The meaning of the term "one" herein is not limited to one wire, but one coil may be formed by twisting a plurality of wires. Specifically, in the present embodiment, only the armature coil 82 through which a single-phase current flows is provided, and no armature coil 82 through which a current other than the single-phase current flows is provided. How to wind the armature coil 82 will be explained hereinafter.

FIG. 3 is a schematic diagram illustrating the structure of the armature coil according to the present embodiment. FIG. 3 is a diagram for explaining how to wind the armature coil 82. As illustrated in FIG. 3, the armature slot 62A between the stator projecting portion 60A and the stator projecting portion 60B serves as armature slot 62A1, and the armature slot 62A between the stator projecting portion 60C and the stator projecting portion 60D serves as armature slot 62A2. Specifically, the armature slot 62A2 is adjacent to the armature slot 62A1 via one field slot 62B in the circumferential direction.

The armature coil 82 is wound around the stator projecting portions 60 in a wave-winding (series winding) manner. Specifically, as illustrated in FIG. 3, the armature coil 82 extends from a part 82A1 to a part 82A2 through the armature slot 62A1 in the direction X1. The part 82A1 is a part of the armature coil 82 located on the direction X2 side of the armature slot 62A1, and serves as a part connected with the power supply unit (inverter 14) in the armature coil 82. The part 82A2 is a part of the armature coil 82 located on the direction X1 side of the armature slot 62A1.

The armature coil 82 extends from the part 82A2 to a part 82B1 while remaining on the direction X1 side of the stator 24. The part 82B1 is a part of the armature coil 82 located on the direction X1 side of the armature slot 62A2. The armature coil 82 extends from the part 82A2 to the part 82B1 so as to extend through a region on the direction X1 side of the stator projecting portions 60B and 60C. In addition, the armature coil 82 extends from the part 82B1 to a part 82B2 through the armature slot 62A2 in the direction X2. The part 82B2 is a part of the armature coil 82 located on the direction X2 side of the armature slot 62A2.

The armature coil 82 extends from the part 82B2 to a part 82C1 while remaining on the direction X2 side of the stator 24. The part 82C1 is a part of the armature coil 82 located on the direction X2 side of the armature slot 62A1. The armature coil 82 extends from the part 82B2 to the part 82C1 so as to extend through a region on the direction X2 side of the stator projecting portions 60D and 60A. The armature coil 82 extends from the part 82C1 to a part 82C2 through the armature slot 62A1 in the direction X1. The part 82C2 is a part of the armature coil 82 located on the direction X1 side of the armature slot 62A2.

The armature coil 82 extends from the part 82C2 to a part 82D1 while remaining on the direction X1 side of the stator 24. The part 82D1 is a part of the armature coil 82 located on the direction X1 side of the armature slot 62A2. The armature coil 82 extends from the part 82C2 to the part 82D1 so as to extend through a region on the direction X1 side of the stator projecting portions 60B and 60C. The armature coil 82 extends from the part 82D1 to a part 82D2 through the armature slot 62A2 in the direction X2. The part 82D2 is a part of the armature coil 82 located on the direction X2 side of the armature slot 62A2, and serves as a part connected with the current supply unit (inverter 14) in the armature coil 82.

As described above, the armature coil 82 is wound by wave winding from the part 82A1 to the part 82D2 while alternately changing the armature slots 62A in the X1 direction and the X2 direction.

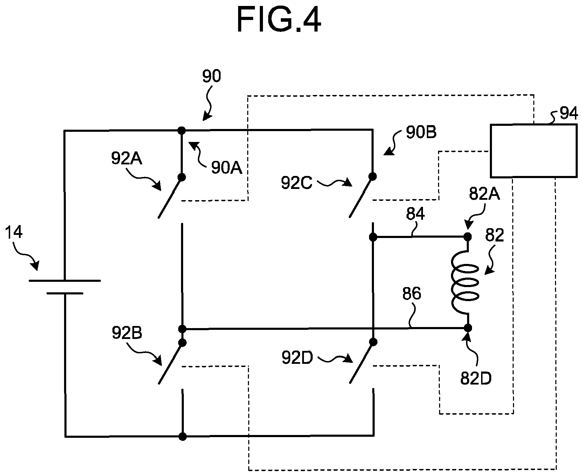

The following is an explanation of the current flowing through the armature coil 82. FIG. 4 is a diagram illustrating an example of a circuit diagram for explaining the current flowing in the present embodiment. FIG. 4 illustrates an example of a circuit 90 of the inverter 14 serving as the current supply unit. The circuit 90 included in the inverter 14 includes the armature coil 82 and switches 92A, 92B, 92C, and 92D. The circuit 90 is connected with the inverter 14, and the wire connected with the inverter 14 is connected with a wire 90A in which the switches 92A and 92B are connected in series, and a wire 90B in which the switches 92C and 92D are connected in series. The wire 90A and the wire 90B are connected in parallel. The switches 92A, 92B, 92C, and 92D are semiconductor switches, and are switched between an on state (extremely low electric resistance state) and an off state (extremely high electric resistance state) with a controller 94.

The armature coil 82 is connected with a part between the switch 92A and the switch 92B of the wire 90A, and a part between the switch 92C and the switch 92D of the wire 90B. Specifically, a part 82D of the armature coil 82 is connected with a wire 86 connected with the part between the switch 92A and the switch 92B of the wire 90A. In addition, a part 82A of the armature coil 82 is connected with a wire 84 connected with the part between the switch 92C and the switch 92D of the wire 90B.

As described above, the armature coil 82 is connected with the inverter 14 with an H bridge circuit. In addition, the magnetic flux switching motor 10 includes the controller 94. In the armature coil 82, the direction in which the current from the inverter 14 flows is changed by a switching operation of the switches 92A, 92B, 92C, and 92D with the controller 94. For example, when the controller 94 changes the switches 92A and 92D to the off state and changes the switches 92B and 92C to the on state, the current (single-phase alternating current) from the inverter 14 flows from the part 82A to the part 82D. By contrast, when the controller 94 changes the switches 92A and 92D to the on state and changes the switches 92B and 92C to the off state, the current from the inverter 14 flows from the part 82D to the part 82A. As described above, the armature coil 82 is capable of switching the direction of the magnetic field to be generated by switching the direction of the flowing current (single-phase alternating current). Specifically, the controller 94 changes the direction of the magnetic field generated from the armature coil 82 by changing the direction of the current applied to the armature coil 82. In this manner, the controller 94 rotates the rotor 26 as described later.

In addition, since the armature coil 82 is wind-wound, the armature coil 82 includes only two parts, that is, the part 82A1 and the part 82D2, as the connection parts connected with the inverter 14 (current supply unit). In addition, this structure enables provision of the part 82A1 and the part 82D2 serving as the connection parts on the same direction side (the direction X2 side of the motor unit 23 herein) of the motor unit 23. This structure reduces routing of the wire, and reduces the size of the circuit 90. In addition, one armature coil 82 is provided, and only a single-phase current is caused to flow through the armature coil 82. This structure suppresses increase in number of switches 92. Accordingly, as illustrated in FIG. 1, the supercharger 1 has a structure in which the sizes of the wires 84 and 86 and the circuit 90 are reduced. This structure suppresses increase in size, in particular, suppresses increase in length in the X direction.

The structure of the motor unit 23 is as described above.

### Rotation of Rotor

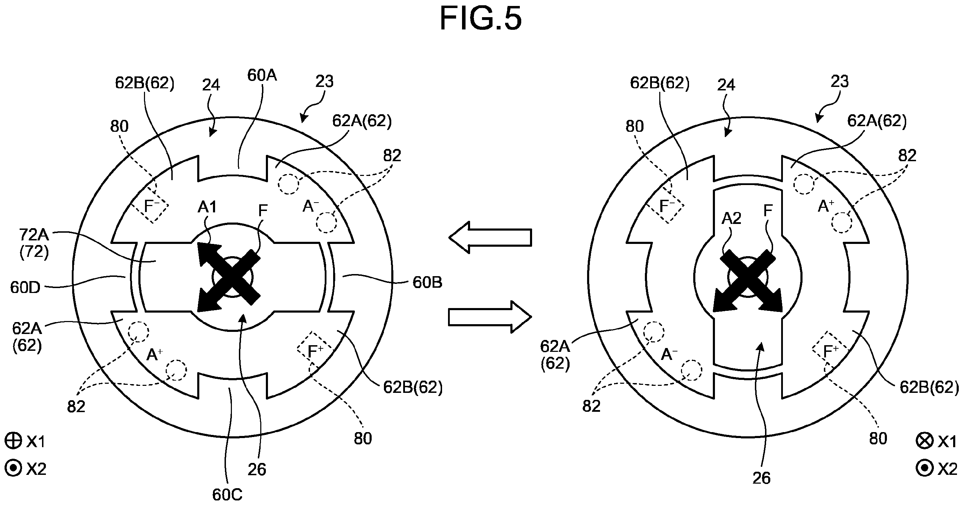

The following is an explanation of rotation of the rotor 26 with the motor unit 23. The motor unit 23 continuously rotates the rotor 26 by generating a magnetic field of a constant direction with the field sources 80 while generating a magnetic field with the armature coil 82 and changing the direction of the magnetic field. FIG. 5 is an explanatory drawing describing change of the field magnetic field and the armature magnetic field in the case of changing the magnetic field of the armature coil.

In the example of FIG. 5, the field sources 80 generate a magnetic field F directed in the lower left direction. Since the field sources 80 do not change the direction of the magnetic field, the field sources 80 generate the magnetic field F always in the same direction (the lower left direction in FIG. 5). By contrast, since a current of one direction is applied to the armature coil 82 in the left drawing in FIG. 5, the armature coil 82 generates a magnetic field A1 directed in the upper left direction. Accordingly, in the left drawing in FIG. 5, the composite magnetic field of the magnetic field F and the magnetic field A is directed toward the left.

When the motor unit 23 switches the direction of the current applied to the armature coil 82 from one direction to the other direction, the armature coil 82 generates a magnetic field A2 instead of the magnetic field A1, as illustrated in the right drawing in FIG. 5. The magnetic field A2 is a magnetic field directed in the lower right direction. In this manner, the composite magnetic field is directed downward.

The motor unit 23 changes the direction of the magnetic field by changing the direction of the magnetic field generated with the armature coil 82. The motor unit 23 excites the rotor 26 with the composite magnetic field, and continuously rotates the rotor 26 by switching the direction of the composite magnetic field.

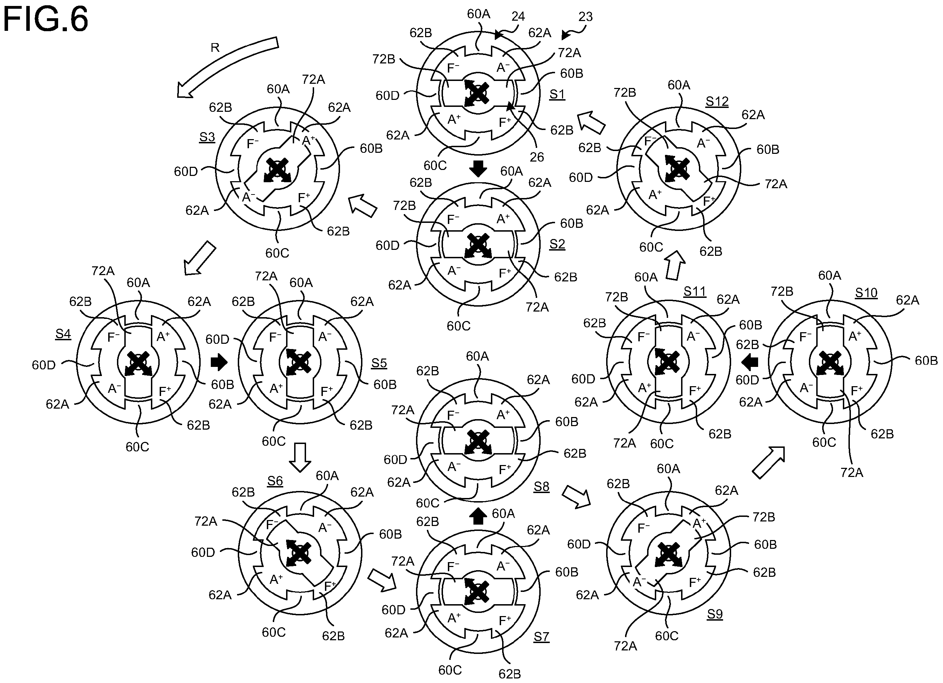

The following is a more detailed explanation of rotation of the rotor 26. FIG. 6 is a schematic diagram describing rotation of the rotor. FIG. 6 illustrates the case where the rotor 26 is rotated in the direction R (counterclockwise in this example) from Step S1 to Step S12. In addition, in the example of FIG. 6, the field source 80 generates a magnetic field directed in the lower left direction in the same manner as FIG. 5, and the direction of the magnetic field is invariable.

Step S1 in FIG. 6 (the uppermost drawing in FIG. 6) illustrates the timing at which the rotor projecting portion 72A of the rotor 26 is opposed to the stator projecting portion 60B of the stator 24. In addition, at Step S1, the armature coil 82 generates a magnetic field directed in the upper left direction with a current (a rotation current) from the inverter 14. Accordingly, the composite magnetic field is directed leftward.

At the timing at which the state of Step S1 is acquired, specifically, at the timing at which the rotor projecting portion 72A is opposed to the stator projecting portion 60B, the controller 94 switches the energization direction of the armature coil 82 (Step S2). Specifically, the controller 94 switches the direction in which the current (rotation current) from the inverter 14 flows. Accordingly, as illustrated at Step S2, the magnetic field generated with the armature coil 82 is switched from the upper left direction to the lower right direction, and the composite magnetic field is directed downward. For this reason, the rotor projecting portion 72A is excited in a downward direction, and the rotor 26 is rotated in the direction R, as illustrated at Step S3 and Step S4.

In this example, Step S2, at which the energization direction of the armature coil 82 is switched, is at the timing at which the rotor projecting portion 72A is opposed to the stator projecting portion 60B, but it is not limited to the timing at which the rotor projecting portion 72A is completely opposed to the stator projecting portion 60B. Step S2, at which the energization direction of the armature coil 82 is switched, may be performed at the timing at which the rotor projecting portion 72A passes through a predetermined position between the stator projecting portion 60B and the stator projecting portion 60A, or at the timing after the rotor projecting portion 72A has slightly passed through the stator projecting portion 60B. At Step S5, S8, and S11 explained hereinafter, energization may be switched in the same manner, at the timing at which the rotor projecting portion 72A passes through a predetermined position between the stator projecting portions 60 (or at the timing at which the rotor projecting portion 72A has slightly passed through the stator projecting portion 60). In addition, the timing at which the rotor projecting portion 72A passes through the predetermined position may be detected with, for example, a sensor 99 illustrated in FIG. 1. The sensor 99 detects, for example, in which position in the circumferential direction the predetermined position of the stator 24 and/or the rotation shaft 22 in the circumferential direction is located. On the basis of the detection result of the sensor 99, the controller 94 switches the energization direction of the armature coil 82.

At the timing of Step S4, specifically, at the timing at which the rotor projecting portion 72A is opposed to the stator projecting portion 60A, the controller 94 switches the energization direction of the rotation current flowing through the armature coil 82 (Step S5). Accordingly, as illustrated at Step S5, the magnetic field generated with the armature coil 82 is switched from the lower right direction to the upper left direction, and the composite magnetic field is directed leftward. For this reason, the rotor projecting portion 72A is excited in a leftward direction, and the rotor 26 continues rotating in the direction R, as illustrated at Step S6 and Step S7.

At the timing of Step S7, specifically, at the timing at which the rotor projecting portion 72A is opposed to the stator projecting portion 60D, the controller 94 switches the energization direction of the rotation current flowing through the armature coil 82 (Step S8). Accordingly, as illustrated at Step S8, the magnetic field generated with the armature coil 82 is switched from the upper left direction to the lower right direction, and the composite magnetic field is directed downward. For this reason, the rotor projecting portion 72A is excited in a downward direction, and the rotor 26 continues rotating in the direction R, as illustrated at Step S9 and Step S10.

At the timing of Step S10, specifically, at the timing at which the rotor projecting portion 72A is opposed to the stator projecting portion 60C (the timing at which the rotor projecting portion 72B is opposed to the stator projecting portion 60A), the controller 94 switches the energization direction of the rotation current flowing through the armature coil 82 (Step S11). Accordingly, as illustrated at Step S11, the magnetic field generated with the armature coil 82 is switched from the lower right direction to the upper left direction, and the composite magnetic field is directed leftward. For this reason, the rotor projecting portion 72B is excited in a leftward direction, and the rotor 26 continues rotating in the direction R, as illustrated at Step S12 and Step S1. After Step S1, the energization switching performed in the same manner enables the rotor 26 to continue rotating in the direction R.

The magnetic flux switching motor 10 rotates the rotation shaft 22 attached to the rotor 26 by rotating the rotor 26 as described above. In this manner, the wheel 52 of the compressor 12 is rotated, and the compressor 12 takes in the air (gas) from the outside, compresses the taken air, and supplies the air to the internal combustion engine or the like.

### In Stopping

As described above, the motor unit 23 according to the present embodiment is of a single-phase system in which a current (current to switch the energization direction) for rotation to be caused to flow through the armature coil 82 is applied with a single phase to one series armature coil 82. For example, when a three-phase current flows through armature coils independent of each other or star-connected or delta-connected (motor of a three-phase system), regardless of the stop position of the rotor 26 when rotation is stopped, the torque in the rotation direction R can be generated in starting by causing a current to flow through each of the coils. However, in the motor of a single-phase system, in some stop positions of the rotor 26, there is the possibility that the torque in the rotation direction R in starting cannot be properly generated even when one coil is energized. In particular, in superchargers, it is important to promptly perform starting. By contrast, in the motor unit 23 according to the present embodiment, the rotor 26 is stopped in a predetermined position. This structure enables proper generation of the torque in the rotation direction R in starting, and enables prompt start. The following is a specific explanation thereof.

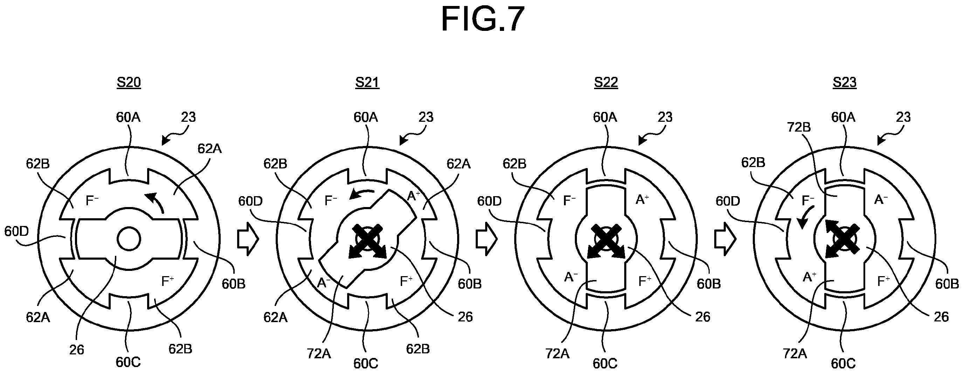

FIG. 7 is a schematic diagram describing control in stopping according to the present embodiment. FIG. 7 illustrates an example in which an instruction to stop rotation of the rotor 26 is issued at Step S20. At Step S20, for example, at the timing at which the rotor projecting portion 72A is opposed to the stator projecting portion 60B, an instruction (stop instruction) to stop rotation is issued. When an instruction to stop rotation of the rotor 26 is issued, the controller 94 stops application of the rotation current to the armature coil 82, and accordingly, generation of the magnetic field from the armature coil 82 is stopped.

Even when generation of the magnetic field is stopped at Step S20, the rotor 26 continues rotation for a while with decreasing rotation speed by inertia force. After the controller 94 stops application of the current to the armature coil 82, when the rotation speed of the rotor 26 becomes smaller than a predetermined speed threshold, the controller 94 applies a stop current serving as a direct current to the armature coil 82 (Step S21). The speed threshold is lower than the rotation speed at the time when the rotor 26 is normally rotated with a rotation current. As another example, application of the stop current may be started when the speed threshold is 0 rpm, that is, when rotation of the rotor 26 is stopped. The rotation speed of the rotor 26 is detected with, for example, the sensor 99 detecting the rotation speed. The controller 94 applies the stop current to the armature coil 82, when the rotation speed of the rotor 26 becomes smaller than the predetermined speed threshold in the detection result of the sensor 99.

By application of the stop current, the magnetic field from the armature coil 82 is generated again, and the composite magnetic field is generated again with the magnetic field generated with the field source 80. The rotor 26 is stopped at a predetermined stop position by sucking force in one direction generated with the composite magnetic field (Step S22). The stop current may be a current of either one direction or the other direction applied to the armature coil 82 in rotation, but the flowing direction cannot be switched and the stop current continues to flow only in one direction. Accordingly, when application of the stop current is continued, the rotor 26 is rotated to a determined stop position, and stopped at the stop position (stop rotation). This structure enables the motor unit 23 to stop the rotor 26 at the predetermined stop position. When the rotor 26 is stopped at the stop position, the controller 94 stops application of the stop current.

Step S21 in FIG. 7 illustrates the timing at which the rotation speed has become smaller than the speed threshold when the rotor projecting portion 72A of the rotor 26 is positioned between the stator projecting portion 60C and the stator projecting portion 60D. However, the timing at which application of the stop current is started is not limited with the position of the rotor 26, and the rotor 26 may be located in any position. In addition, the flowing direction of the stop current may be either one direction or the other direction. For example, in the example of FIG. 7, the composite magnetic field is directed downward with the stop current to set the stop position to a position in which the rotor projecting portion 72 are aligned in the vertical direction. By contrast, when the stop current is set to the reverse direction, the composite magnetic field is directed leftward, and the stop position is set to a position in which the rotor projecting portions 72 are aligned in the horizontal direction. As described above, regardless of the direction of the stop current, the rotor 26 is stopped at any of predetermined stop positions. Specifically, a plurality of stop positions are set in the circumferential direction, and the rotor 26 is stopped at one of the stop positions. The number of stop positions depends on the number of rotor projecting portions 72 of the rotor 26, and is equal to the number of rotor projecting portions 72. When rotation of the rotor 26 is required to be rapidly reduced forcibly by regenerative braking, application of the stop current may be started in the state where the rotation speed of the rotor 26 is equal to or larger than the speed threshold described above.

After the rotor 26 is stopped at Step S22, when an instruction (start instruction) to start the rotor 26 is received, the controller 94 starts the rotor 26 by applying a current of a direction opposite to the stop current (Step S23). Since the rotor 26 has been guided to the stop position with the stop current, the rotor 26 can be properly rotated by generation of a composite magnetic field of a different direction with a current of a direction opposite to the stop current. The subsequent rotation method is similar to FIG. 6.

As described above, when an instruction to stop rotation of the rotor 26 is issued, the motor unit 23 applies a stop current of a constant energization direction instead of the rotation current. In this manner, the motor unit 23 guides the rotor 26 to the stop position, and stops the rotor 26 at the stop position. In addition, in restart, the motor unit 23 causes a rotation current of a direction opposite to the stop current to flow through the rotor 26. In this manner, the motor unit 23 enables proper generation of the torque in the rotation direction R in the rotor 26, and proper start of the rotor 26.

The current value of the stop current is preferably smaller than the current value in rotation. In the explanation described above, application of the stop current is started after the rotation current is stopped and when the rotation speed of the rotor 26 becomes smaller than the predetermined speed threshold. However, the timing of starting application of the stop current is not limited thereto, but may be, for example, the timing at which a predetermined time has passed after stop of the rotation current. As another example, the stop current may be applied so as to be switched from the rotation current, instead of being applied after the rotation current has been stopped. In addition, the magnetic field generated with the field source 80 is maintained at Step S20 in the example of FIG. 7, but generation of the magnetic field with the field source 80 may be stopped together with stop of application of the rotation current. In this case, generation of the magnetic field with the field source 80 is restarted when the stop current is applied at Step S21 and Step S22 and when application of the rotation current is restarted at Step S23. In addition, in the case where the field source 80 is a field coil as described later, application of the current to the field coil is stopped at Step S20, and application of the current to the field coil is restarted when the stop current is applied at Step S21 and S22 and when application of the rotation current is restarted at Step S23. In this manner, even if the rotor 26 is moved from the intended stop position due to the external torque or the like, the rotor 26 is returned to the intended stop position.

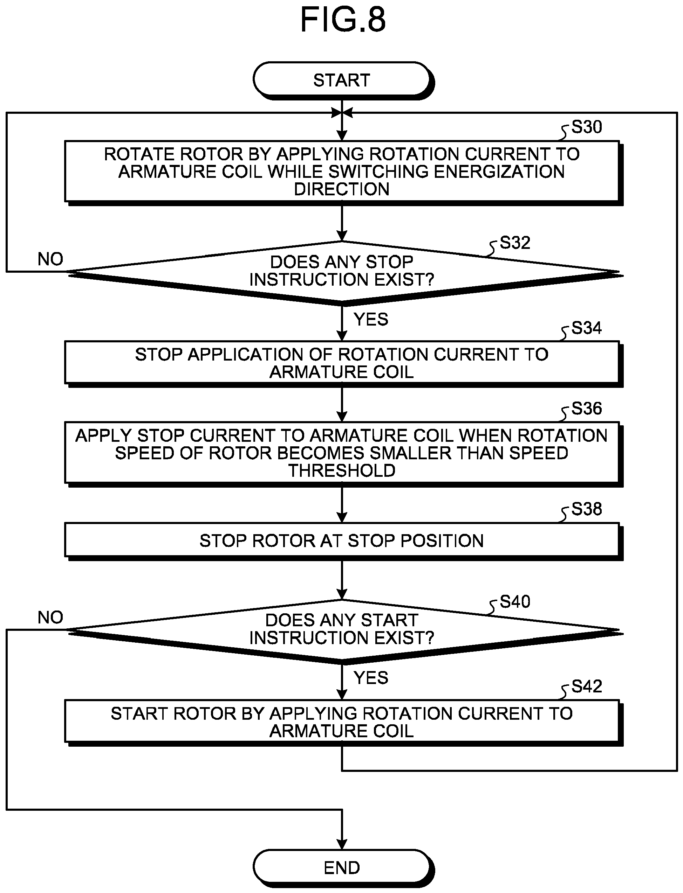

The following is an explanation of a control flow for control of stop and start of the rotor 26 with the motor unit 23 explained above. FIG. 8 is a flowchart for explaining control of stop and start of the rotor according to the present embodiment.

As illustrated in FIG. 8, when the rotor 26 is rotated, the controller 94 applies the rotation current to the armature coil 82 while switching the energization direction, to rotate the rotor 26 (Step S30). Specifically, at Step S30, as illustrated in each of the steps of FIG. 6, the controller 94 applies the rotation current to the armature coil 82 while switching the energization direction. In this manner, the rotor 26 is enabled to continue rotating.

When the rotor 26 is rotated, the controller 94 determines whether any stop instruction exists (Step S32). The stop instruction is an instruction to stop operation of the magnetic flux switching motor 10, and input by an operator, for example. When the controller 94 determines that no stop instruction exists, that is, determines that any stop instruction does not exist (No at Step S32), the controller 94 returns to Step S30, and continues rotation of the rotor 26. By contrast, when the controller 94 determines that a stop instruction exists (Yes at Step S32), the controller 94 stops application of the alternating rotation current to the armature coil 82 (Step S34). As another example, at Step S34, the controller may cause a direct current to flow or apply an alternating current generating braking torque of a direction opposite to the rotation direction. By these operations, since the magnetic field generating the torque of the rotation direction disappears, the rotor 26 is gradually decelerated while continuing rotation by inertia.

After application of the rotation current is stopped, when the rotation speed of the rotor 26 becomes smaller than the speed threshold, the controller 94 applies the stop current to the armature coil 82 (Step S36), and stops the rotor 26 at the stop position (Step S38). The controller 94 acquires information of the rotation speed of the rotor 26 from, for example, the sensor 99, and starts application of the stop current to the armature coil 82 at the timing at which the rotation speed of the rotor 26 becomes smaller than the speed threshold. The controller 94 performs energization only in one direction, without changing the energization direction of the stop current. With the stop current, the composite magnetic field is generated again, and the rotor 26 is rotated to the stop position and stopped at the stop position. In this manner, stop control of the rotor 26 is finished.

After the rotor 26 is stopped, the controller 94 determines whether a start instruction exists (Step S40). The start instruction is an instruction to start (operate) operation of the magnetic flux switching motor 10, and input by an operator, for example. By contrast, when the controller 94 determines that a start instruction exists (Yes at Step S40), the controller 94 applies the rotation current to the armature coil 82, starts the rotor 26 (Step S42), and thereafter moves to Step S30 to continue rotation control. When the controller 94 starts the rotor 26, the controller 94 applies a current flowing in a direction opposite to the energization direction of the stop current, as the rotation current. In this manner, the controller 94 is enabled to properly start the rotor 26. After such a stop action is executed, when certain time passes until a start instruction is issued, there is the possibility that the rotor 26 moves from the predetermined stop position with the external torque. Accordingly, in such a case, for example, the stop action may be performed again after a start instruction is received, and a start action may be performed after the second stop action is performed. When the controller 94 determines that no start instruction exists, that is, determines that any stop instruction does not exist (No at Step S40), the controller 94 does not start the rotor 26, and ends the present process.

As described above, the supercharger 1 according to the present embodiment includes the magnetic flux switching motor 10 including the rotor 26, the stator 24, the field sources 80, the armature coil 82, and the controller 94, and the wheel 52 attached to the rotor 26 and rotating together with rotation of the rotor 26 to compress the air. The stator 24 is an annular member storing the rotor 26 to make the rotor 26 rotatable therein, and includes a plurality of stator projecting portions 60 projecting inward in the radial direction from the internal circumferential portion 56A toward the rotor 26. The field sources 80 are provided in respective field slots 62B, and generate a magnetic field of a constant direction. The field slots 62B are a part of slots 62 among a plurality of the slots 62 provided between the stator projecting portions 60. The armature coil 82 is provided in armature slots 62A. The armature slots 62A are the other slots 62 in the slots 62. The controller 94 and the inverter 14 apply a single-phase current to the armature coil 82 and changes the direction of the single-phase current applied to the armature coil 82 to change the direction of the magnetic field generated from the armature coil 82 and rotate the rotor 26.

The supercharger 1 according to the present embodiment compresses the air using the magnetic flux switching motor 10. The magnetic flux switching motor 10 operates by application of a single-phase current to the armature coil 82 with the controller 94. Specifically, the supercharger 1 according to the present embodiment uses the magnetic flux switching motor 10 of a single-phase system. Since the supercharger 1 uses the magnetic flux switching motor 10 of a single-phase system, the supercharger 1 is capable of suppressing: increase in number of semiconductor switches; and increase in parts connected with the current supply unit. Accordingly, the supercharger 1 is capable of suppressing, in particular: increase in length along the X direction; and increase in size. In addition, using the magnetic flux switching motor 10 of a single-phase system suppresses increase in size and cost of the circuit 90, and achieves advantageous motor design.

In addition, when the controller 94 receives an instruction to stop rotation of the rotor 26, the controller 94 stops the rotor 26 at one of a plurality of stop positions set in the circumferential direction, by applying a stop current flowing in a constant direction to the armature coil 82. In the case of controlling rotation with only a single-phase current, in some stop positions of the rotor 26, there is the possibility that the rotor 26 cannot be properly started. However, the controller 94 according to the present embodiment is capable of guiding the rotor 26 to one of the predetermined stop positions with the stop current, and stop the rotor 26 at the stop position. The controller 94 is capable of properly starting the rotor 26 by determining the stop position of the rotor 26. Accordingly, the supercharger 1 according to the present embodiment enables proper rotation of the rotor 26 while suppressing the size.

In addition, when the controller 94 receives an instruction to start the rotor, the controller 94 starts the rotor 26 by applying a current of a direction opposite to the stop current to the armature coil 82. The controller 94 guides the rotor 26 to the stop position with the stop current. In starting, the controller 94 generates a composite magnetic field of a direction different from the direction at the time when the controller 94 guides the rotor 26 to the stop position, by applying a current of a direction opposite to the stop current to the armature coil 82. In this manner, the controller 94 is capable of properly starting the rotor 26. Accordingly, the supercharger 1 according to the present embodiment enables proper rotation of the rotor 26 while suppressing the size.

In addition, the armature coil 82 is wound around a plurality of stator projecting portions 60 in a wave-winding manner. This structure enables the armature coil 82 to be wound around the stator projecting portions 60 in series, and more properly suppresses increase in parts connected with the current supply unit. With this structure, the supercharger 1 according to the present embodiment is capable of more properly suppressing increase in size.

In addition, each of the field sources 80 according to the present embodiment is a permanent magnet. Using a permanent magnet as the field source 80 enables proper generation of a magnetic field of a constant direction.

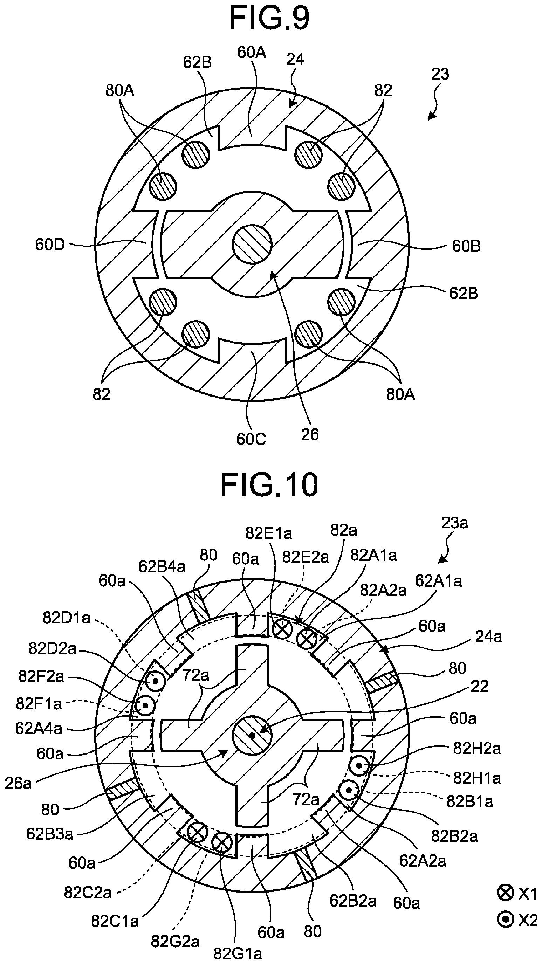

However, as described above, each of the field sources 80 is not limited to a permanent magnet, as long as it generates a magnetic field of a constant direction. FIG. 9 is a schematic diagram illustrating another example of the field sources. As illustrated in FIG. 9, the motor unit 23 may include field sources 80A, instead of the field sources 80. The field sources 80A are field coils to which a current of a constant direction is applied. The field sources 80A are provided in the field slots 62B, wound around the stator projecting portion 60C and the stator projecting portion 60D together, and wound around the stator projecting portion 60A and the stator projecting portion 60B together. The field sources 80A include two coils, that is, a coil wound around the stator projecting portion 60C and the stator projecting portion 60D together, and a coil wound around the stator projecting portion 60A and the stator projecting portion 60B together. However, the field sources 80A may be one coil in the same manner as the armature coil 82, and may be wound around the stator projecting portions 60 in a wave-winding manner in the same manner as the armature coil 82. The field sources 80A is provided with a current of a constant direction applied with the controller 94, and the current direction thereof is not switched. In this manner, the field sources 80A are capable of generating a magnetic field of a constant direction in the same manner as the field sources 80. As described above, since the field sources 80A are field coils to which a current of a constant direction is applied, the field sources 80A are capable of properly generating a magnetic field of a constant direction.

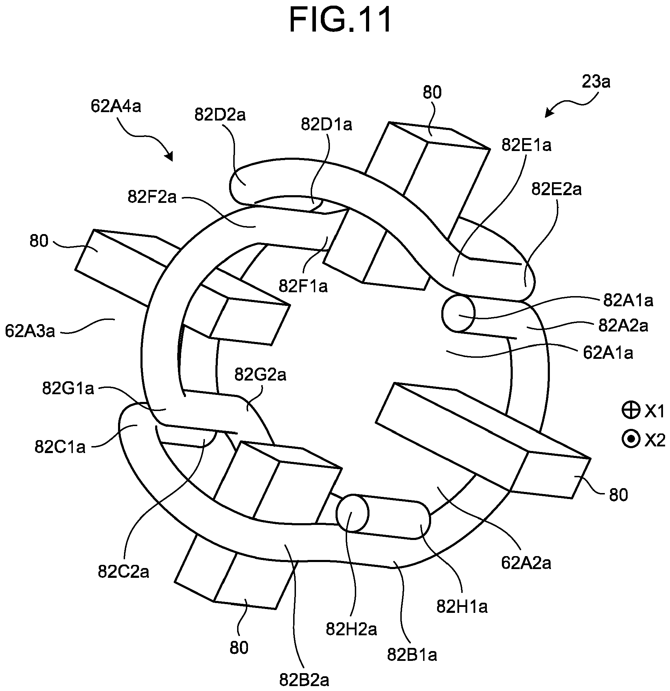

In addition, in the explanation described above, the number of stator projecting portions 60 is four, and the number of rotor projecting portions 72 is two, but the numbers of stator projecting portions 60 and rotor projecting portions 72 are not limited thereto, as described above. FIG. 10 is a schematic diagram illustrating another example of the stator projecting portions and the rotor projecting portions, and FIG. 11 is a schematic diagram illustrating an example of wave winding. As illustrated in FIG. 10, a motor unit 23a according to another example includes a stator 24a, a rotor 26a, and an armature coil 82a. The stator 24a includes eight stator projecting portions 60a, and the rotor 26a includes four rotor projecting portions 72a. The stator 24a is provided with an armature slot 62A1a, a field slot 62B1a, an armature slot 62A2a, a field slot 62B2a, an armature slot 62A3a, a field slot 62B3a, an armature slot 62A4a, and a field slot 62B4a in this order in the circumferential direction.

The armature coil 82a is wound around the stator projecting portions 60a by wave winding in the same manner as the armature coil 82 of FIG. 3, but wound as explained hereinafter on the basis of FIG. 10 and FIG. 11 because the number of rotor projecting portions 72a is different.

FIG. 11 is a perspective view obtained by removing the stator 24a and the rotor 26a from FIG. 10, and illustrates only the field sources 80 and the armature coil 82a. As illustrated in FIG. 10 and FIG. 11, the armature coil 82a extends with a structure in which a part 82A1a, a part 82A2a, a part 82B1a, a part 82B2a, a part 82C1a, a part 82C2a, a part 82D1a, a part 82D2a, a part 82E1a, a part 82E2a, a part 82F1a, a part 82F2a, a part 82G1a, a part 82G2a, a part 82H1a, and a part 82H2a are arranged in this order.

The armature coil 82a extends from the part 82A1a to the part 82A2a through the armature slot 62A1a in the direction X1. The part 82A1a is a part of the armature coil 82a located on the direction X2 side of the armature slot 62A1a, and serves as a part connected with the power supply unit (inverter 14) in the armature coil 82a. The part 82A2a is a part of the armature coil 82a located on the direction X1 side of the armature slot 62A1a.

The armature coil 82a extends from the part 82A2a to the part 82B1a while remaining on the direction X1 side of the stator 24a. The part 82B1a is a part of the armature coil 82a located on the direction X1 side of the armature slot 62A2a. The armature coil 82a extends from the part 82A2a to the part 82B1a so as to extend through a region on the direction X1 side of the two stator projecting portions 60a. In addition, the armature coil 82a extends from the part 82B1a to the part 82B2a through the armature slot 62A2a in the direction X2. The part 82B2a is a part of the armature coil 82a located on the direction X2 side of the armature slot 62A2a.

The armature coil 82a extends from the part 82B2a to a part 82C1a while remaining on the direction X2 side of the stator 24a. The part 82C1a is a part of the armature coil 82a located on the direction X2 side of the armature slot 62A3a. The armature coil 82a extends from the part 82B2a to the part 82C1a so as to extend through a region on the direction X2 side of the two stator projecting portions 60a. The armature coil 82a extends from the part 82C1a to the part 82C2a through the armature slot 62A3a in the direction X1. The part 82C2a is a part of the armature coil 82a located on the direction X1 side of the armature slot 62A3a.

The armature coil 82a extends from the part 82C2a to a part 82D1a while remaining on the direction X1 side of the stator 24a. The part 82D1a is a part of the armature coil 82a located on the direction X1 side of the armature slot 62A4a. The armature coil 82a extends from the part 82C2a to the part 82D1a so as to extend through a region on the direction X1 side of the two stator projecting portions 60a. The armature coil 82a extends from the part 82D1a to the part 82D2a through the armature slot 62A4a in the direction X2. The part 82D2a is a part of the armature coil 82a located on the direction X2 side of the armature slot 62A4a.

The armature coil 82a extends from the part 82D2a to a part 82E1a while remaining on the direction X2 side of the stator 24a. The part 82E1a is a part of the armature coil 82a located on the direction X2 side of the armature slot 62A1a. The armature coil 82a extends from the part 82D2a to the part 82E1a so as to extend through a region on the direction X2 side of the two stator projecting portions 60a. The armature coil 82a extends from the part 82E1a to the part 82E2a through the armature slot 62A1a in the direction X1. The part 82E2a is a part of the armature coil 82a located on the direction X1 side of the armature slot 62A1a.

The armature coil 82a extends from the part 82E2a to a part 82F1a while remaining on the direction X1 side of the stator 24a. The part 82F1a is a part of the armature coil 82a located on the direction X1 side of the armature slot 62A4a. The armature coil 82a extends from the part 82E2a to the part 82F1a so as to extend through a region on the direction X1 side of the two stator projecting portions 60a. The armature coil 82a extends from the part 82F1a to the part 82F2a through the armature slot 62A4a in the direction X2. The part 82F2a is a part of the armature coil 82a located on the direction X2 side of the armature slot 62A4a.

The armature coil 82a extends from the part 82F2a to a part 82Gia while remaining on the direction X2 side of the stator 24a. The part 82Gia is a part of the armature coil 82a located on the direction X2 side of the armature slot 62A3a. The armature coil 82a extends from the part 82F2a to the part 82Gia so as to extend through a region on the direction X2 side of the two stator projecting portions 60a. The armature coil 82a extends from the part 82Gia to the part 82G2a through the armature slot 62A3a in the direction X1. The part 82G2a is a part of the armature coil 82a located on the direction X1 side of the armature slot 62A3a.

The armature coil 82a extends from the part 82G2a to a part 82H1a while remaining on the direction X1 side of the stator 24a. The part 82H1a is a part of the armature coil 82a located on the direction X1 side of the armature slot 62A2a. The armature coil 82a extends from the part 82G2a to the part 82H1a so as to extend through a region on the direction X1 side of the two stator projecting portions 60a. The armature coil 82a extends from the part 82H1a to the part 82H2a through the armature slot 62A2a in the direction X2. The part 82H2a is a part of the armature coil 82a located on the direction X2 side of the armature slot 62A2a, and serves as a part connected with the current supply unit (inverter 14) in the armature coil 82a.

As described above, the armature coil 82a is wound by wave winding from the part 82A1a to the part 82H2a while alternately changing the armature slots 62Aa in the X1 direction and the X2 direction. Specifically, the armature coil 82a can be inserted through all the armature slots by wave winding even when the number of stator projecting portions 60a increases, and can maintain the number of parts connected with the current supply unit at two. Even when the number of stator projecting portions further increases, the armature coil can be inserted through all the armature slots by wave winding, and can maintain the number of parts connected with the current supply unit at two.

The embodiment of the present invention has been described above, but the embodiment is not limited to the details of the embodiment described above. In addition, the constituent elements described above include elements that one skilled in the art could easily conceive, substantially the same elements, and elements of the equivalent range. The constituent elements described above may be properly used in combination. In addition, various omissions, replacement, and changes of the constituent elements are possible within the range not departing from the gist of the embodiment described above.

### Reference Signs List

- 1: SUPERCHARGER
- 10: MAGNETIC FLUX SWITCHING MOTOR
- 12: COMPRESSOR
- 14: INVERTER
- 22: ROTATION SHAFT
- 23: MOTOR UNIT
- 24: STATOR
- 26: ROTOR
- 52: WHEEL
- 56A: INTERNAL CIRCUMFERENTIAL PORTION
- 60, 60A, 60B, 60C, 60D: STATOR PROJECTING PORTION
- 62: SLOT
- 62A: ARMATURE SLOT
- 62B: FIELD SLOT
- 72: ROTOR PROJECTING PORTION
- 80: FIELD SOURCE
- 82: ARMATURE COIL
- 94: CONTROLLER

## Claims

1. A supercharger comprising:
a magnetic flux switching motor; and
a wheel,
wherein the magnetic flux switching motor includes
a rotor;
a stator that is an annular member storing the rotor to make the rotor rotatable therein and includes a plurality of stator projecting portions projecting inward in a radial direction from an internal circumferential portion toward the rotor;
a field source that is provided in a field slot serving as a part of a plurality of slots formed between the stator projecting portions to generate a magnetic field of a constant direction;
an armature coil that is provided in an armature slot serving as another of the slots; and
a controller that applies a single-phase current to the armature coil and changes a direction of the applied single-phase current to change a direction of a magnetic field generated from the armature coil and rotate the rotor, and
the wheel is attached to the rotor, and rotates together with rotation of the rotor to compress the air.

2. The supercharger according to claim 1, wherein the controller stops the rotor at one of a plurality of stop positions determined in a circumferential direction by applying a stop current flowing in a constant direction to the armature coil, in response to receiving an instruction to stop rotation of the rotor.

3. The supercharger according to claim 2, wherein the controller starts the rotor by applying a current of a direction opposite to the stop current to the armature coil, in response to receiving an instruction to start the rotor.

4. The supercharger according to any one of claims 1 to 3, wherein the field source is a permanent magnet.

5. The supercharger according to any one of claims 1 to 3, wherein the field source is a field coil to which a current of a constant direction is applied.

6. The supercharger according to any one of claims 1 to 5, wherein the armature coil is wound around a plurality of the stator projecting portions in a wave-winding manner.
